# EUROPEAN PATENT APPLICATION

(11) **EP 3 258 647 A1**
(43) Date of publication of application: **20.12.2017**
(21) Application number: 16174353.9
(22) Date of filing: 14.06.2016
(51) Int. Cl.: H04L 12/28

(54) **COMBINED WIRED AND WIRELESS CONTROL IN A BUILDING AUTOMATION SYSTEM**

(71) Applicant: Helvar Oy Ab, 02150 Espoo (FI)
(72) Inventor: Wade, Scott, Danbury, Chelmsford Essex CM3 4PD (GB); Björkgren, Max, 02150 ESPOO (FI)
(74) Representative: Berggren Oy, Helsinki & Oulu

(57) **Abstract**

A network node of a building automation system comprises both a wired communications interface and a wireless communications interface for communicating with other nodes of the building automation system. A body part of the network node comprises a connector of a wired control bus of said building automation system. Information belonging to the domain of said wired communications interface and information belonging to the domain of said wireless communications interface are both configured to go through said connector.

## Description

### FIELD OF THE INVENTION

The invention relates to controlling the devices that form a lighting system or a building automation system. In particular the invention relates to such controlling in which wireless and/or wired signal transmission can be used in a versatile way.

### BACKGROUND OF THE INVENTION

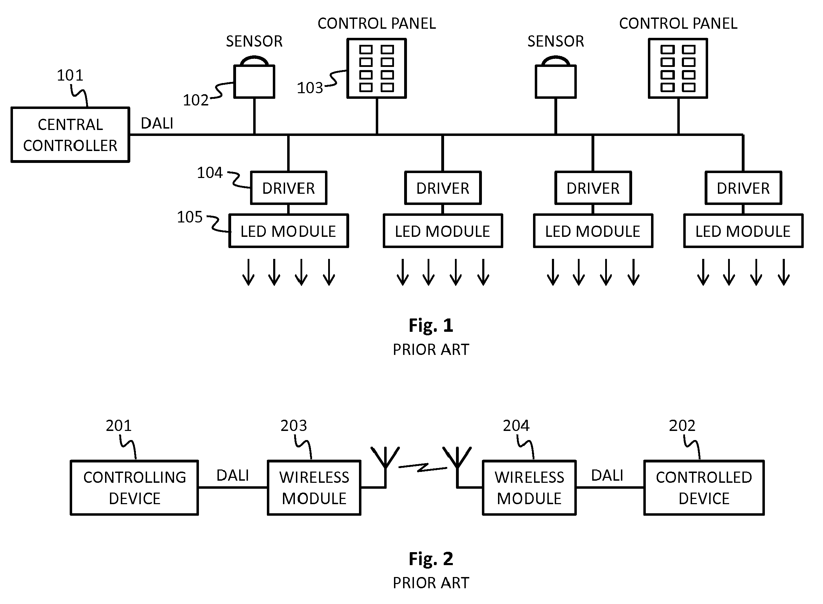

Wired control has been the norm in building automation systems, of which a lighting control system is an example. Fig. 1 illustrates a known lighting control system, in which a wired control bus (here: a DALI bus; Digital Addressable Lighting Interface, IEC 60929 and IEC 62386) connects a central controller 101 and a number of devices such as sensors 102, control panels 103, and luminaires or lighting fixtures. A typical luminaire comprises an operating device or driver 104 and a light source such as a LED module 105. The operating power lines, such as mains AC lines, have been omitted in fig. 1 to keep the graphical representation simple. A single central controller 101 may have one or more DALI buses under its control. External communications connections like Ethernet or WLAN connections may link the central controller 101 to a remote controlling station.

Wired control involves the inherent drawback that the control wires must be drawn to each and every location at which at least one device of the network is installed. An obvious alternative would be to utilize wireless control, but it may in turn introduce other problems like uncertain signal propagation conditions, susceptibility to picked-up interference, interference emitted towards other devices nearby, congestion on available bandwidths, vulnerability to malevolent external influence and eavesdropping, and increased overall power consumption.

The convincing advantages of wired control on one hand and the uncontested freedom involved in wireless control on the other hand has led to a paradigm in which the building automation system relies upon wired connections where it is practical, and may involve wireless parts in particular where mobility, fast and/or frequent changes in configuration, or specific difficulties in placing wires are prominent factors. Designers and manufacturers of networkable building automation devices are left with the task of designing their products so that they offer maximal adaptability to various needs. At the same time the designers and manufacturers would like to avoid unduly burdening the logistic chains with excessive numbers of different product versions. Another aim that may lead to contradictory requirements is to avoid equipping the devices with redundant circuitry, only some of which would be actually used in practice.

Fig. 2 illustrates a solution discussed in a prior art document WO 2013/016534 A1. A controlling device 201 and a controlled device 202 are originally designed and built for operation in a wired DALI network. The connection between them cannot be made through wire, for which reason a controller side wireless module 203 and a controlled device side wireless module 204 are provided. A specific task of the wireless modules 203 and 204 is to take care of the timing of DALI frames transmitted between the controlling device 201 and controlled device 202 so that the unavoidable additional delays introduced by the wireless leg in between do not cause the DALI communications to fail.

### SUMMARY OF THE INVENTION

It is an objective of the present invention to provide a network node of a building automation system that is capable of both wired and wireless communications according to need. Another objective of the invention is that said network node can be realized with an advantageously small number of hardware components. Yet another objective of the invention is that the hardware of a network node of the kind mentioned above is adaptable to various wired and wireless communication requirements with no or only few and easily implemented modifications.

The objects of the invention are achieved with a network node in which the same connector is used to convey both information belonging to the domain of the wired communications interface and information belonging to the domain of the wireless communications interface.

According to an aspect of the invention there is provided a network node of a building automation system, wherein:
- the network node comprises both a wired communications interface and a wireless communications interface for communicating with other nodes of the building automation system,
- a body part of the network node comprises a connector of a wired control bus of said building automation system,
- information belonging to the domain of said wired communications interface and information belonging to the domain of said wireless communications interface are both configured to go through said connector.

According to another aspect of the invention there is provided a building automation system comprising at least one network node of the kind described above.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 illustrates a known wired building automation system,
figure 2 illustrates a known wireless leg in a control connection,
figure 3 illustrates signals, messages, and information according to an embodiment,
figure 4 illustrates a network node according to an embodiment,
figure 5 illustrates signals, messages, and information according to another embodiment,
figure 6 illustrates a network node according to another embodiment,
figure 7 illustrates a network node according to another embodiment,
figure 8 illustrates a building automation system according to an embodiment, figure 9 illustrates signals, messages, and information according to another embodiment,
figure 10 illustrates a network node according to another embodiment,
figure 11 illustrates signals, messages, and information according to another embodiment,
figure 12 illustrates a network node according to another embodiment, and figure 13 illustrates a building automation system according to another embodiment.

### DETAILED DESCRIPTION

Information is contained in messages, which in turn are carried by signals. For the purposes of the following description the concepts of signals, messages, and information are defined in the following way.

Signals mean electric, magnetic, optical, or other measurable quantities and their repetitive changes which can be caused by a transmitting device and detected by a receiving device. Examples of signals include but are not limited to voltages and currents in conductive wires, as well as oscillating electromagnetic fields propagating through conductors, through a medium, or through free space. The concept of wired signals is used to describe signals, the characteristics of which are such that conductive wires are their best or only practicable means for propagation. For example the DALI standard defines voltage levels that are so small and voltage changes that are so slow and infrequent that although in exact physical sense their creation necessarily creates also electromagnetic radiation, the only practicable way of detecting said voltage levels and their changes is to couple a suitable detecting circuit to the other end of the wires between which they were created at the transmitting end. The concept of wireless signals is used to describe signals, the characteristics of which are such that they can propagate across meaningful distances through a medium or free space in the form of electromagnetic radiation like radio waves, microwaves, infrared radiation, visible light, or ultraviolet radiation. At least in some cases wireless signals can propagate also through conductive media: for example RF (radio frequency) signals can be picked up by an antenna and conducted to detecting circuitry through transmission lines consisting of conductive elements. For the purposes of this description such signals will be classified as wireless signals as long as they occur on frequencies that directly allow the coupling and conversion between truly wireless and wired propagation modes through radiating elements (antennas) designed for this purpose.

Messages are signal sequences, the form and purpose of which are defined in advance. A communications standard typically defines the allowable forms of messages, including factors like the length of the message, the allowable ways of initiating and terminating a message (like training sequences, start bits and stop bits), and the internal structure of messages (like address fields, payload fields, and checksums). Additionally the communications standard typically defines the rights of the various devices to initiate the transmission of messages, as well as the timing between consecutive messages and the procedures to be taken to avoid collisions in transmissions on the bus. Examples of messages include but are not limited to the forward and backward frames of the DALI standard as well as the transmission frames defined in the ZigBee standard.

Information is the meaningful content of messages. Typically the information consists of bits and bit combinations for which a particular meaning has been defined in advance. For example if a controlling device wants to order a controlled lighting device to increase its light output to 80%, it retrieves from memory the sequence of bits that has been agreed to mean an order "increase light output to 80%" as well as the sequence of bits that identifies the intended recipient of the order in the lighting control system. Both of these sequences are examples of information. The controlling device then encapsulates these sequences of bits into a message of an allowable kind, and uses a transmitter to produce the signals that convey the message towards the appropriate lighting device. If the information is destined for transmission and reception through wired signals, it is said to belong to the domain of the wired communications interface. Similarly if the information is destined for transmission and reception through wireless signals, it is said to belong to the domain of the wireless communications interface.

Whether the information is destined for transmission and reception through wired or wireless signals is typically decided by the device that decides to transmit a message, because in some preceding configuration step said device has been made aware of the best way of transmission for each kind of messages. For example, the device that decides to transmit a message may be a sensor that may select between wired and wireless transmissions. Previously the sensor has been programmed to know that messages announcing an immediate detection result of a monitored quantity are to be transmitted wirelessly, because not all devices that need to know the detection result have wired control connections. On the other hand, housekeeping messages that only concern the monitored internal state of the sensor are best transmitted through a wired connection, because their only intended recipient is a central controlling station to which a wired connection is available. Similar examples of a transmitting device destining a particular piece of information for either wired or wireless transmission can be easily presented in various situations and frameworks. For a receiving device the selection is even more straightforward, because information received in a message carried by wired or wireless signals is naturally taken as destined for the respective way of reception.

In network nodes constructed for a building automation system a body part of the network node typically comprises a connector for a wired control bus of the building automation system. For example the DALI standard requires the network node to comprise a two-pole connector for the relatively thin conductive wires that carry the DALI signals. For the ease of installation it is advantageous if the connector is accessible from outside an outer cover of the body part and of a type that allows installing the DALI wires quickly and easily, like just by pushing them into the respective holes or slots. According to an aspect of the invention both information belonging to the domain of the wired communications interface and information belonging to the domain of the wireless communications interface are configured to go through said connector.

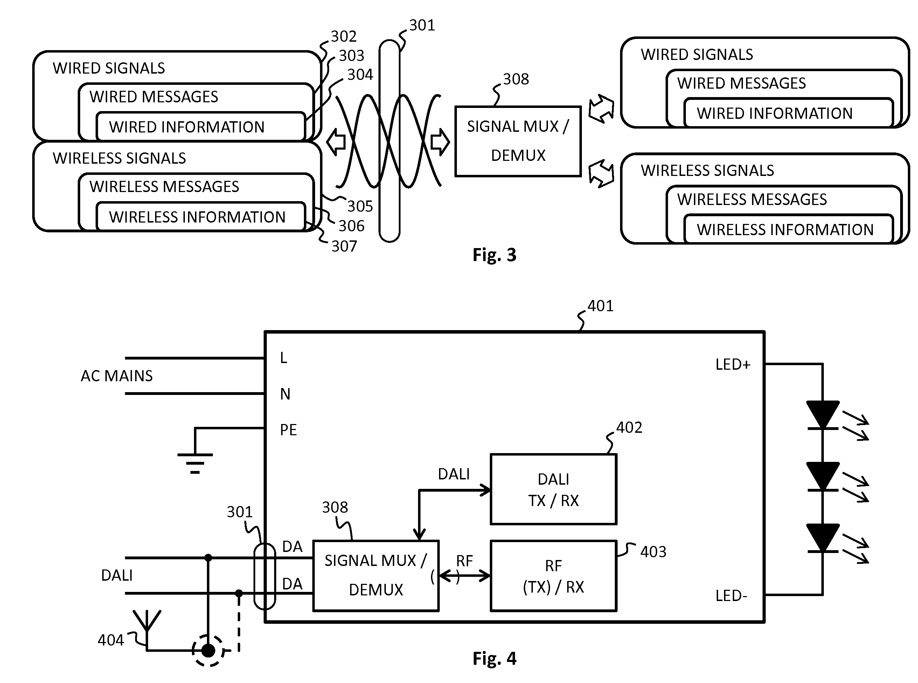

A first implementation of this principle is shown in fig. 3, in which the occurrence and relations of signals, messages, and information is examined when they pass through a connector 301 in one direction and/or the other. Wired signals 302 are used to carry wired messages 303, which in turn contain information belonging to the domain of a wired communications interface. For the sake of brevity the information belonging to the domain of a wired communications interface is called the wired information 304. Similarly wireless signals 305 are used to carry wireless messages 306 that contain information belonging to the domain of a wireless communications interface, or wireless information 307 for short. On the other side of the connector 301 a signal multiplexer and demultiplexer 308 is responsible for the combining and separating of the various signals respectively, so that wired signals 302 and wireless signals 305 are directed to and from their respective communications interfaces.

Fig. 4 illustrates a network node of a building automation system. In this case the network node is a control gear for LED lighting. The body part 401 of the network node comprises a three-pole operating power connection, in which the "L" pole is for the live wire of the mains AC connection, the "N" pole is for the neutral wire, and the "PE" pole is for the protective earth connection. On the output side the body part 401 comprises the LED+ and LED- connections, between which the LED light source(s) is/are to be connected. The body part 401 of the network node comprises a connector 301 of a wired control bus of the building automation system; in this case this means a two-pole connector for the wires of a DALI bus. The "DA" identifier is frequently used on the outer cover of devices capable of communications over the DALI bus to designate the connector to which the wires of the DALI bus are to be connected.

The network node of fig. 401 comprises both a wired communications interface and a wireless communications interface for communicating with other nodes of the building automation system. In terms of the wired communications interface the network node comprises a wired communications module 402 configured to handle wired messages carried by wired signals, i.e. signals on wired frequencies. The wired communications module 402 may be e.g. a circuit of the kind that known network nodes of a DALI lighting control system use to receive and transmit DALI messages. In terms of the wireless communications interface the network node comprises a wireless communications module 403 configured to handle wireless messages carried by wireless signals, i.e. signals on wireless frequencies. The wireless communications module 403 may be e.g. a circuit of the kind that is found in devices configured for wireless communications according to the Bluetooth, ZigBee, or other wireless communication standards.

The wired communications module 402 and the wireless communications module 403 are both inside the body part 401 in fig. 4, so that the wired and wireless messages are both configured to go through the connector 301 of the wired control bus of the building automation system. In the embodiment of fig. 4 the wired communications module 402 and the wireless communications module 403 are different circuits, and a signal multiplexer and demultiplexer 308 within the body part 401 is coupled between the connector 301 on one hand and the wired communications module 402 and the wireless communications module 403 on the other hand. The operation of the signal multiplexer and demultiplexer 308 may be based on e.g. frequency, so that signals occurring on wired frequencies are only allowed to pass between the connector 301 and the wired communications module 402 while signals occurring on wireless frequencies are only allowed to pass between the connector 301 and the wireless communications module 403. Frequency-selective circuits of this kind are essentially low-pass, high-pass, or band-pass filters with at least two separate pass bands. They are known as such to the person skilled in the art, and their structure and operation are easily adapted to the particular frequency ranges in question, so they do not need to be described here in more detail.

The network node of fig. 4 comprises an antenna 404 for receiving and/or transmitting said signals on wireless frequencies. The antenna 404 is external to the body part 401 and connected to the connector 301. Basically it would be possible to use an internal antenna within the body part 401, but the use of an external antenna involves the advantage that the antenna can be placed more freely, enabling optimizing the propagating conditions for the wireless signals. According to fig. 4 the antenna 404 is a dedicated antenna part, which is connected to either one or both of the two nodes of the connector 301. Such a dedicated antenna part could be a structural part of its own, or a dedicated antenna may be supported by some structural part of the network node: it can be for example a patch antenna formed on the surface of an outer cover of the body part 401 or a piece of conductive wire attached to the outer cover of the body part 401. If the network node involves other structures, like parts related to the structure of a luminaire in which the network node acts as a control gear, such structures can be used in the practical implementation of the antenna 404. As an example, in many LED luminaires the LEDs are located on the surface of a printed circuit board constituting a LED module, in which case the antenna 404 can be constituted of suitably designed conductive tracks on the surface of the printed circuit board. Since the light emitted by the LEDs of a LED module needs to have an unobstructed path towards the direction of illumination, placing the antenna 404 on the surface of a common printed circuit board with the LEDs involves the advantage of guaranteeing also a relatively unobstructed path for radio waves to and/or from the antenna 404.

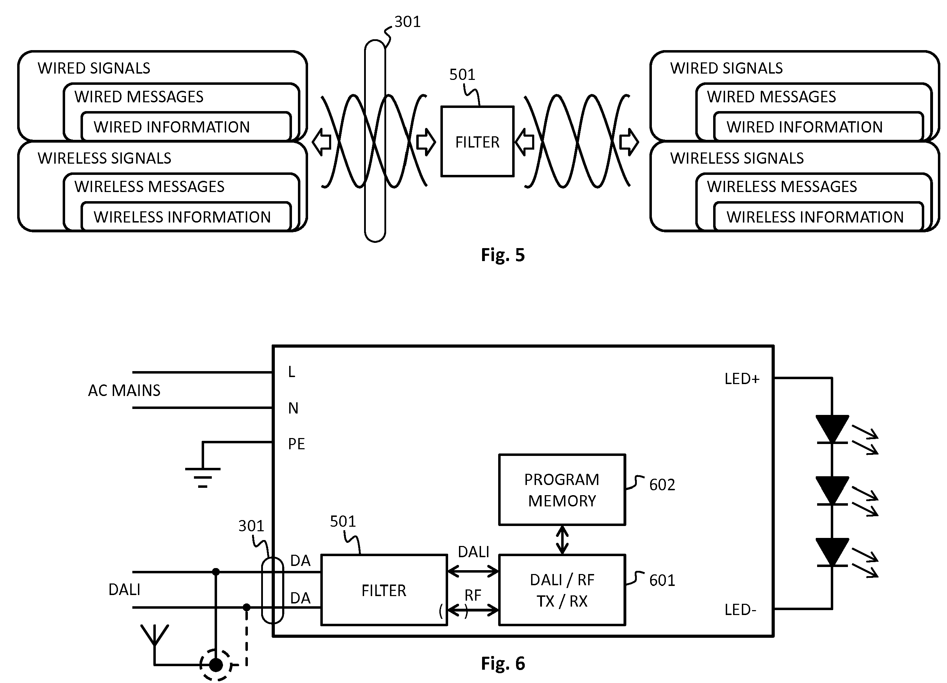

Figs. 5 and 6 illustrate a slightly different approach that nevertheless shares with figs. 3 and 4 the principle that the wired and wireless communications modules are both inside the body part 401. In the case of figs. 5 and 6 the wired and wireless communications modules are not different circuits but share essentially the same hardware, illustrated as the common communications module 601 in fig. 6. The common communications module 601 may be a programmable circuit, like a digital signal processor. A program memory 602 in the network node comprises software in the form of stored machine-readable instructions that, when executed by one or more processors, are configured to make the hardware act as either a wired communications module or a wireless communications module as needed. In fig. 5 this principle is illustrated so that the wired and wireless information, contained in the wired and wireless messages and carried by the wired and wireless signals respectively, share the same physical propagation path also to the right of the connector 301. Since a signal multiplexer and demultiplexer is not needed, the intermediate block (if any is needed) between the connector 301 and the common communications module 601 may be e.g. a 603 filter configured to block signals on other frequencies than those on which the wired and wireless signals are known to occur.

The principle of figs. 5 and 6 can be applied so that in terms of hardware the common communications module 601 is capable of acting both as a wired communications module and as a wireless communications module, but if only one of these functionalities is needed, only the corresponding software need be stored in the program memory 602. Such an embodiment is particularly advantageous in cases where the loading of software to the program memory 602 can be made later than at the original manufacturing stage of the network node. For example, network nodes of a building automation system may be delivered to an installation site with no (or just a very limited set of) communications software installed, and only when at the installing stage it becomes clear which devices are to take part in the wired communications and which devices in the wireless communications, the corresponding software is loaded to them.

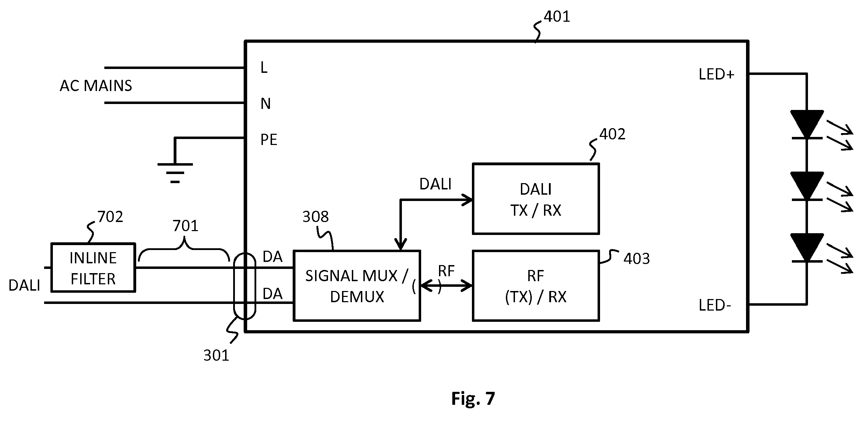

Fig. 7 illustrates an alternative implementation of the antenna. In fig. 7 this alternative is shown compared to the approach of fig. 4, but the same alternative approach could be taken in all embodiments in which an antenna is provided external to the body part 401. In fig. 7 the antenna is not a dedicated antenna part but constituted by one or more portions 701 of one or more wires that also act as carriers of the signals on wired frequencies between the network node and other network nodes in the building automation system. In order to define the length of the one or portions 701 of wire, and also in order to ensure that wireless signals do not propagate further than necessary in the wire(s), an inline filter 702 is provided at the distal end of the portion 701 of wire.

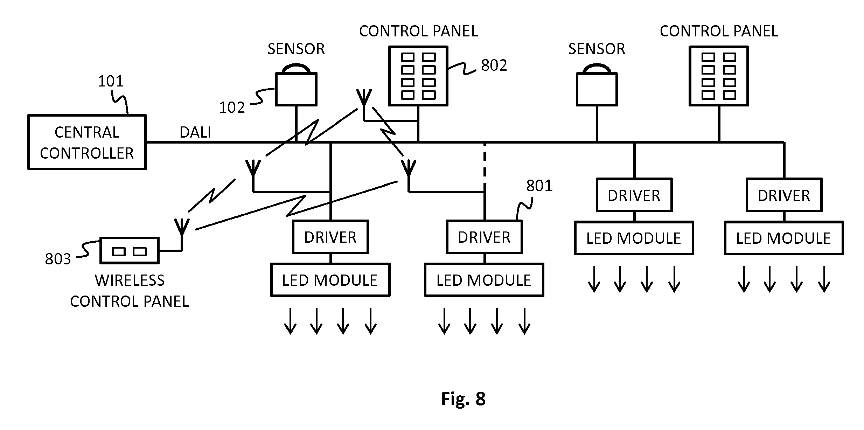

Fig. 8 illustrates an example of a building automation system that utilizes at least one of the embodiments described above with reference to figs. 3 to 7. Also here a DALI-based lighting control network acts as an example of a building automation system. A central controller or router 101 controls the DALI network, which may include completely normal DALI-controlled devices like sensors 102. The first two luminaires along the DALI network utilize the technology of the present invention, so that each of them comprises both a wired communications interface and a wireless communications interface for communicating with other nodes of the building automation system. In some or all of said devices at least one of said interfaces may be disabled (or not used despite its existence), which is illustrated with a dashed line between the driver 801 and the backbone of the DALI network. The first control panel 802 also utilizes the technology of the present invention, so that it comprises both a wired communications interface and a wireless communications interface for communicating with other nodes of the building automation system. Additionally the lighting control system comprises at least one device, like the wireless control panel 803, which is not DALI-connected at all but only comprises a wireless communications interface.

The wireless communication interfaces may be available for as versatile (or even more versatile!) controlling of the building automation system as the wired communication interfaces. However, one advantageous way of applying the invention is to use the wireless communication interfaces as a backup or during an installation phase, when only a limited way of controlling the building automation system is needed. Considering a lighting control system as an example, while the completed wired communications may offer dimming, colour control, colour temperature control, time-dependent lighting effects, sensor-controlled lighting and the like, the wireless communications may be meant for simple on-off switching. This possibility is illustrated schematically in fig. 8 by showing the wireless control panel 803 with fewer buttons than the wired control panel 802.

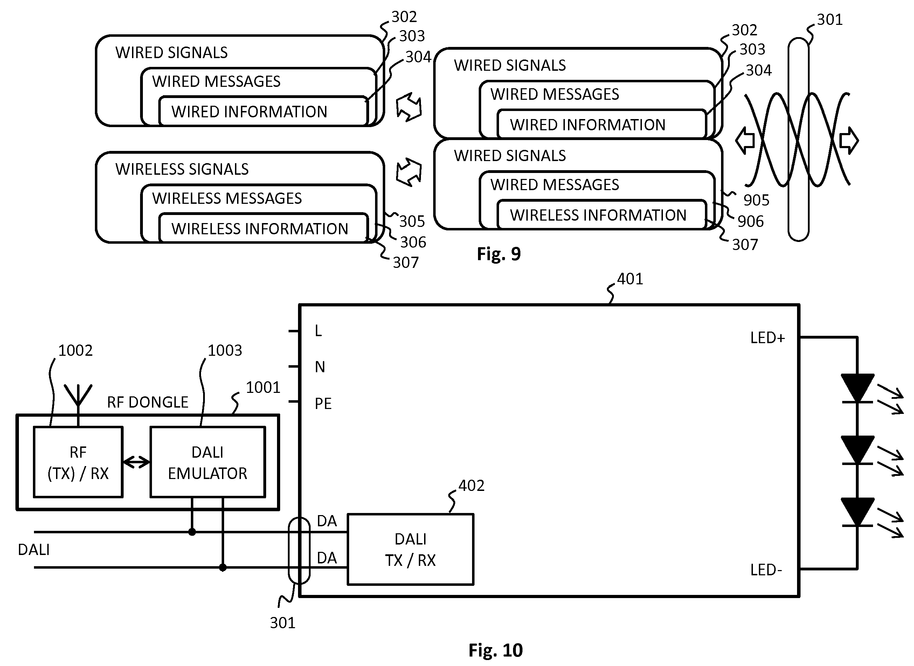

Figs. 9 and 10 illustrate a slightly different approach that nevertheless shares with figs. 3 to 7 the principle that the network node comprises both a wired communications interface and a wireless communications interface for communicating with other nodes of the building automation system. Also in figs. 9 and 10 a body part 401 of the network node comprises a connector 301 of a wired control bus of the building automation system, and information belonging to the domain of the wired communications interface and information belonging to the domain of the wireless communications interface are both configured to go through the connector 301. The difference is that while the network node comprises a wired communications module 402 inside the body part 401, coupled to the connector 301 and configured to handle wired messages carried by signals on wired frequencies, the network node comprises a wireless communications module 1001 that is external to the body part 401. The wireless communications module 1001 is called the RF dongle in fig. 10. It is configured to handle wireless messages carried by signals on wireless frequencies, as illustrated by the RF receiver or transceiver block 1002. The wireless communications module 101 is also configured to perform conversions between the wireless messages and wired messages that carry the same information as the wireless messages. The latter functionality is illustrated in fig. 10 as the DALI emulator block 1003. The wireless communications module 1001 is coupled to the connector 301.

How the information belonging to the domain of the wired communications interface and information belonging to the domain of the wireless communications interface are both configured to go through the connector 301 in fig. 10 is illustrated in fig. 9. Wired signals 302 carry wired messages 303 that contain wired information 304 on the wired bus between the network nodes, as usual. Between the wireless communications module 1001 and other wirelessly communicating parts of the building automation system, wireless signals 305 carry wireless messages 306 that include wireless information 307. However, between the wireless communications module 1001 and the connector 301 the wireless information 307 is contained in wired messages 906 carried by wired signals 905. Most preferably these wired signals 905 and wired messages 906 conform to the same standard(s) as the wired signals 302 and wired messages 303 that contain the wired information 304. In that case the wired communications module 402 inside the body part 401 may be an ordinary, standard-conforming wired bus interface.

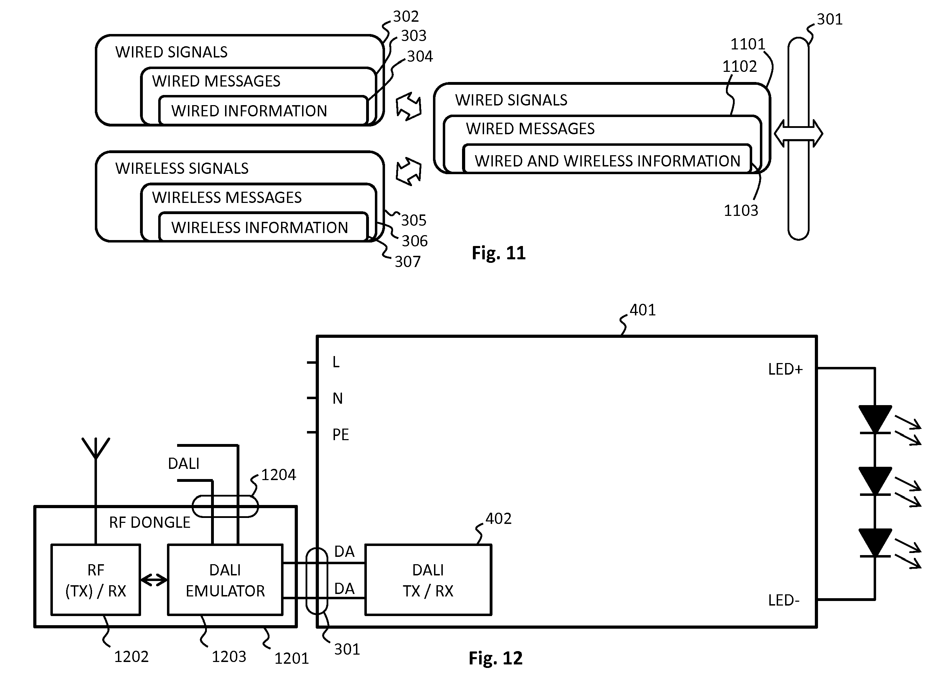

The approach of figs. 9 and 10 can be characterised so that the wired communications interface 402 comprises a wired connection for other nodes of the building automation system past the wireless communications module 1001. Figs. 11 and 12 illustrate a slightly different approach, in which the wired communications interface 402 comprises a wired connection for other nodes of the building automation system through the wireless communications module 1201. In this case the RF receiver or transceiver block 1202 may be similar to block 1002 in fig. 10, but compared to the DALI emulator block 1003 of fig. 10 the DALI emulator block 1203 of fig. 12 acts as a repeater for wired messages between the wired communications module 402 and other network nodes that apply wired communications. In a variation of this embodiment the communications standard that the wired connection for other nodes conforms to is different than the communications standard that the wired connection between the wireless communications module 1201 and the wired communications module 402 conforms to. As an example, while the communications between blocks 1203 and 402 may conform to the DALI standard, the external connections to and from block 1203 through connector 1204 may conform to the KNX standard. In this variation the DALI emulator block 1203 thus acts as a protocol converter rather than a repeater for wired messages between the wired communications module 402 and other network nodes that apply wired communications.

Fig. 11 shows the principle according to which the wired and wireless communications that follow different paths outside the network node are consolidated into wired signals 1101 that carry wired messages 1102 containing both wired and wireless information 1103 between the wireless communications module and the connector 301. Said consolidation does not mean that the wired and wireless information should coexist in common messages: fig. 11 merely emphasizes how the wired and wireless information share the same transmission medium and the same transmission format through the connector 301 to a conceptually greater extent in the approach of fig. 12 than in that of fig. 10.

Figs. 10 and 12 show the wireless communications modules 1001 and 1201 to have a dedicated antenna part. Like in fig. 7 above, as an alternative it is possible to utilize one or more portions of one or more wires that also act as carriers of said signals on wired frequencies between the network node and other network nodes in said building automation system. If such portion of wire is located between the wireless communications module 1201 and the connector 301 in fig. 12, it is easy to take care of the necessary filtering so that the RF signals present in the antenna do not unnecessarily propagate to those parts of the wires that link the network node to other network nodes on the bus.

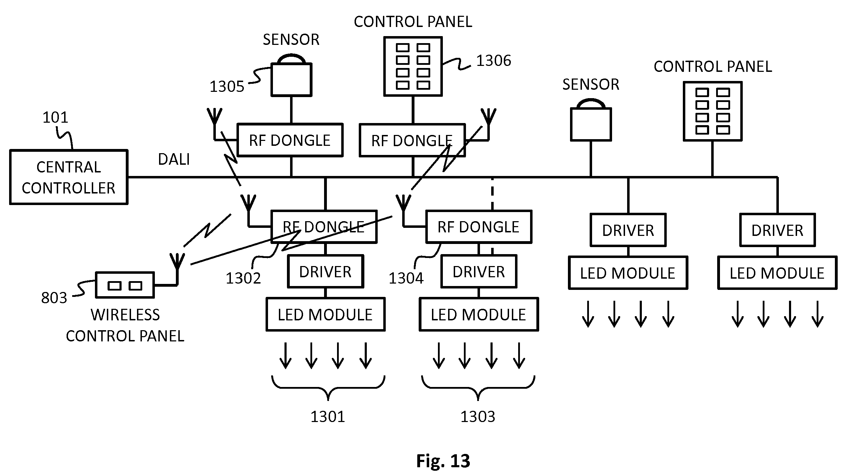

Fig. 13 illustrates an example of a building automation system that utilizes at least one of the embodiments described above with reference to figs. 9 to 12. Also here a DALI-based lighting control network acts as an example of a building automation system. A central controller or router 101 controls the DALI network, which may include completely normal DALI-controlled devices like those in the right-hand part of the drawing. The first two luminaires along the DALI network utilize the technology of the present invention, so that each of them comprises both a wired communications interface and a wireless communications interface for communicating with other nodes of the building automation system. In fig. 13 it is assumed that the first luminaire 1301 is constructed according to the embodiment of figs. 11 and 12, so that the wired connection between it and the backbone of the DALI network goes through its wireless communications module 1302, while the second luminaire 1303 is constructed according to the embodiment of figs. 9 and 10, so that the wired connection between it and the backbone of the DALI network goes past its wireless communications module 1304. The dashed appearance of said connection also emphasizes the possibility that the wired connection may be disabled or non-existent in some of those network nodes that have the capability for wireless communications. The sensor 1305 and the control panel 1306 are constructed according to the embodiment of figs. 11 and 12.

Whether the wireless communications are used for unidirectional or bidirectional communications, and whether the wireless communications are of broadcast type or point-to-point (or point-to-multipoint as in addressed group transmissions) deserves some consideration. If the network node only receives wireless signals and does not transmit, it may produce significantly weaker high-frequency interference to other devices than if it was also transmitting.

This may be significant in particular in those embodiments in which the antenna is constituted by one or more portions of the wires that also carry signals on wired frequencies, because not as much filtering is required to protect the other network nodes from interference. On the other hand the nature of some types of network nodes requires that they also transmit: for example if a control panel is to be used to control lighting, it is necessary that the control panel can transmit commands or at least indications of the way in which the user has manipulated the controls.

One possibility is that a wireless control panel sends its commands in a broadcast fashion, so that all luminaires that are within range and that are equipped for wireless communications may receive them and act accordingly. This possibility works well in the exemplary situation that was already considered briefly earlier, in which the wireless communications are only used as a backup or as a helpful addition during installation, so that the wireless control panel is able to turn nearby lights on and off but little else.

In those embodiments of the invention where the wireless communications module is external to the body part and uses e.g. the DALI standard for the wired messages that contain wireless information, several possibilities exist for commissioning and addressing. We may take the embodiment of fig. 12 as an example. Wired messages that come to the connector 1204 may be addressed to this network node, and are typically to be executed by circuitry within the body part 401 and not within the wireless communications module 1201. One possibility is that the DALI emulator block 1203 just forwards such wired messages to the wired communications module 402 through the connector 301. Another possibility is that at the time when the wireless communications module 1201 was attached to the body part 401, these devices set up a "micro-DALI" network of their own, so that the wired signals that go between the blocks 1203 and 402 utilize an addressing scheme and timing of their own, separated from the addressing scheme and timing applied in the actual DALI network in which only the DALI emulator block 1203 communicates with the other network nodes.

The drawings and description above have consistently shown a LED driver as a part of the network node in order not to confuse the differences between features of the described embodiments. However, the invention is not in any way limited to just LED drivers as network nodes, but the network node can be any node that may need to communicate with other network nodes of a building automation system through wired and/or wireless connections. Examples of such other network nodes include but are not limited to sensors, control panels, actuators, communication hubs, and central controllers (routers). Similarly DALI has been consistently used as an example of a wired building automation bus, but the invention is in no way limited to DALI so that any wired building automation bus can be used in a similar way. Also other variations to the described embodiments are possible and within the capability of a person skilled in the art.

## Claims

1. A network node of a building automation system, wherein:
- the network node comprises both a wired communications interface and a wireless communications interface for communicating with other nodes of the building automation system,
- a body part of the network node comprises a connector of a wired control bus of said building automation system,
- information belonging to the domain of said wired communications interface and information belonging to the domain of said wireless communications interface are both configured to go through said connector.

2. A network node according to claim 1, wherein:
- the network node comprises a wired communications module configured to handle wired messages carried by signals on wired frequencies,
- the network node comprises a wireless communications module configured to handle wireless messages carried by signals on wireless frequencies,
- said wired and wireless communications modules are both inside said body part, and
- said wired messages and said wireless messages are both configured to go through said connector.

3. A network node according to claim 2, wherein:
- said wired communications module and said wireless communications module are different circuits, and
- a signal multiplexer and demultiplexer within said body part is coupled between said connector on one hand and said wired communications module and said wireless communications module on the other hand.

4. A network node according to claim 2, wherein:
- said wired communications module and said wireless communications module share essentially the same hardware, and
- said network node comprises software in the form of stored machine-readable instructions that, when executed by one or more processors, are configured to make said hardware act as either said wired communications module or said wireless communications module as needed.

5. A network node according to any of claims 2 to 4, comprising an antenna for at least one of receiving said signals on wireless frequencies or transmitting said signals on wireless frequencies, wherein said antenna is external to said body part and connected to said connector.

6. A network node according to claim 5, wherein said antenna is either
- a dedicated antenna part or
- a dedicated antenna supported on or in another structural part or
- constituted by one or more portions of one or more wires that also act as carriers of said signals on wired frequencies between the network node and other network nodes in said building automation system.

7. A network node according to claim 1, wherein:
- the network node comprises a wired communications module inside said body part, coupled to said connector and configured to handle wired messages carried by signals on wired frequencies,
- the network node comprises a wireless communications module external to said body part, configured to handle wireless messages carried by signals on wireless frequencies and to perform conversions between said wireless messages and wired messages that carry the same information as said wireless messages, and
- said wireless communications module is coupled to said connector.

8. A network node according to claim 7, wherein said wired communications interface comprises a wired connection for other nodes of said building automation system past said wireless communications module.

9. A network node according to claim 7, wherein said wired communications interface comprises a wired connection for other nodes of said building automation system through said wireless communications module.

10. A network node according to any of claims 1 to 9, wherein said network node is one of:
- a control device of a lighting control system,
- a control gear of a lighting control system.

11. A building automation system comprising at least one network node according to any of claims 1 to 10.

12. A building automation system according to claim 11, wherein:
- the building automation system is or comprises a lighting control system,
- said lighting control system comprises a wired lighting control bus, and
- said lighting control system comprises at least one network node that is configured to communicate with one or more other network nodes with wired messages and with one or more other network nodes with wireless messages.
